# EUROPEAN PATENT APPLICATION

(11) **EP 4 624 508 A1**
(43) Date of publication of application: **01.10.2025**
(21) Application number: 23894456.5
(22) Date of filing: 13.11.2023
(51) Int. Cl.: C08G 59/30, C08K 3/013, C08L 63/00

(54) **EPOXY RESIN COMPOSITION**

(30) Priority: 22.11.2022 JP 2022186143
(71) Applicant: SHIN-ETSU CHEMICAL CO., LTD., Tokyo 1000005 (JP); The School Corporation Kansai University, Suita-shi, Osaka 564-8680 (JP)
(72) Inventor: NODA Daisuke, Annaka-shi, Gunma 379-0224 (JP); NAKAGAWA Hideo, Tokyo 100-0005 (JP); IRIFUNE Shinji, Annaka-shi, Gunma 379-0224 (JP); HARADA Miyuki, Suita-shi, Osaka 564-8680 (JP)
(74) Representative: Röthinger, Rainer
(86) International application number: PCT/JP2023/040675
(87) International publication number: WO 2024/111447

(57) **Abstract**

The present invention is an epoxy resin composition containing (A) an epoxy resin containing two or more epoxy groups in a molecule, (B) a urethane bond-containing polyorganosiloxane represented by the following formula (1), (C) a mesogenic group-containing polyorganosiloxane represented by the following formula (2), and (D) an epoxy resin curing agent. This provides an epoxy resin composition containing a polyorganosiloxane.

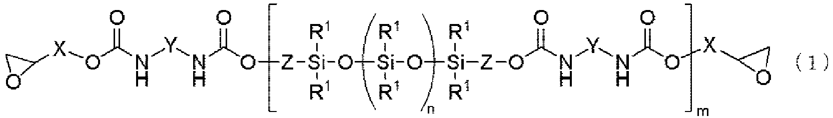

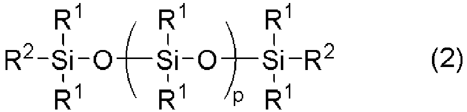

## Description

### TECHNICAL FIELD

The present invention relates to an epoxy resin composition.

### BACKGROUND ART

Epoxy resins are used in various fields due to their excellent mechanical strength, electrical insulation, heat resistance, chemical resistance, water resistance, low shrinkage, and adhesion. In recent years, requirements for performance in epoxy resins have increased, and developments dealing with low toughness that is a problem of epoxy resins have been promoted (Patent Documents 1 to 4).

An epoxy-modified silicone is a polyorganosiloxane having an epoxy group, and is used in applications such as resin modifiers, fiber treatment agents, and paint additives that utilize the reactivity of the epoxy group. The effect of imparting flexibility to the epoxy resin is also expected, but a problem is that it is poorly compatible with other polar compounds such as a curing agent, and it separates.

Patent Document 5 describes a silicone having at both ends a urethane bond in which an epoxy group is introduced. In Examples therein, it has been reported that a transparent solution is obtained when the silicone is mixed with a bisphenol A-type epoxy resin, and a cured product is obtained by reaction with a curing agent. However, there is a problem that the heat resistance is deteriorated because the glass transition point (Tg) of the epoxy resin itself is reduced by adding this silicone.

Patent Document 6 discloses an epoxy resin having a mesogenic group, and reports that it has excellent workability, mechanical properties, thermal properties, and chemical properties. However, it is not clear how each physical property changes when the epoxy resin is mixed with a general epoxy resin such as a bisphenol-type epoxy resin.

### CITATION LIST

### PATENT LITERATURE

Patent Document 1: JP 2008-239890 A
Patent Document 2: JP 2014-505761 A
Patent Document 3: JP 2017-536440 A
Patent Document 4: WO 2018/008741 A1
Patent Document 5: JP 1986-228015 A
Patent Document 6: JP 2008-214599 A

### SUMMARY OF INVENTION

### TECHNICAL PROBLEM

The present invention has been made in view of such circumstances, and an object of the present invention is to provide an epoxy resin composition containing a polyorganosiloxane.

### SOLUTION TO PROBLEM

To solve the above problem, the present invention provides an epoxy resin composition containing:
(A) an epoxy resin containing two or more epoxy groups in a molecule;
(B) a urethane bond-containing polyorganosiloxane represented by the following formula (1): 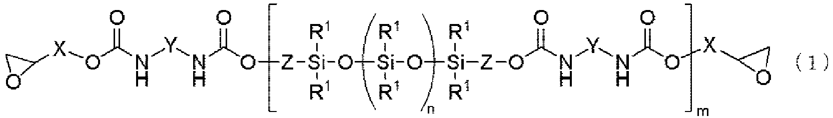 wherein, R¹ each independently represents a group selected from an alkyl group having 1 to 12 carbon atoms, an aryl group having 6 to 12 carbon atoms, and an aralkyl group having 7 to 12 carbon atoms, or a hydroxy group, X is each independently a divalent alkylene group having 1 to 10 carbon atoms, Y is each independently a group selected from an alkylene group having 5 to 30 carbon atoms and optionally having an ether bond, an arylene group having 6 to 30 carbon atoms, and an aralkylene group having 7 to 30 carbon atoms, Z is each independently an alkylene group having 1 to 20 carbon atoms and optionally having an ether bond, "n" is an integer from 0 to 100, and "m" is 1 to 10;
(C) a mesogenic group-containing polyorganosiloxane represented by the following formula (2): 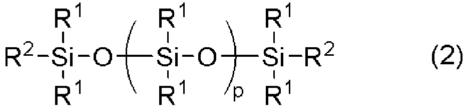 wherein, R¹ each independently represents a group selected from an alkyl group having 1 to 12 carbon atoms, an aryl group having 6 to 12 carbon atoms, and an aralkyl group having 7 to 12 carbon atoms, or a hydroxy group, "p" represents a repeating unit of a siloxane structure and is an integer from 0 to 100, and R² each independently represents the following formula (3) or formula (4): 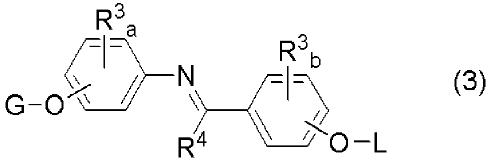 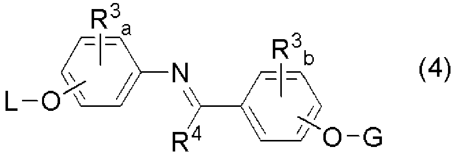 wherein, R³ and R⁴ each independently represent a hydrogen atom or a monovalent hydrocarbon group having 1 to 10 carbon atoms, L is a linking group to the formula (2) and is a divalent hydrocarbon group having 1 to 12 carbon atoms, "a" and "b" represent the number of substituents of phenyl group in the formulae (3) and (4) and are integers from 0 to 4, and G is a glycidyl ether group; and
(D) an epoxy resin curing agent.

Such an epoxy resin composition becomes an epoxy resin composition containing a polyorganosiloxane with excellent various properties.

In the present invention, 1 to 20 parts by mass of the component (B) and 1 to 20 parts by mass of the component (C) are preferably contained based on 100 parts by mass of the component (A).

With such an epoxy resin composition, sufficient strength and adhesion as a cured product of an epoxy resin can be obtained. In addition, Tg lowering can be suppressed, thus high heat resistance can be maintained.

In the present invention, the number average molecular weight of the component (B) in terms of polystyrene standard is preferably 500 to 100,000.

With such an epoxy resin composition, the size of the structure constituting the island structure of the sea-island structure does not increase too much, and microphase separation can be formed. In addition, the size of the island structure can be controlled by selecting the number average molecular weight within this range.

In the present invention, the epoxy equivalent (g/mol) of the component (B) is preferably 300 to 5,000 g/mol.

With such an epoxy resin composition, the size of the structure constituting the island structure of the sea-island structure does not increase too much, and microphase separation can be formed. In addition, the size of the island structure can be controlled by selecting the epoxy equivalent in this range.

In the present invention, the component (B) preferably contains hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.

By reducing these cyclic low-molecular weight siloxanes, it is possible to avoid the reduction of adhesion due to the bleeding out of the low-molecular weight components on the surface of the cured product, the pollution of the surrounding environment due to the volatilization of the low-molecular weight components, and the like.

In the present invention, the number average molecular weight of the component (C) in terms of polystyrene standard is preferably 500 to 100,000.

Such a molecular weight is sufficient for the epoxy groups at both ends to react with the curing agent to obtain a cured product.

In the present invention, the epoxy equivalent (g/mol) of the component (C) is preferably 300 to 5,000 g/mol.

With such an epoxy equivalent, the epoxy groups at both ends sufficiently react with the (C) epoxy resin curing agent to obtain a cured product having excellent physical properties.

In the present invention, the component (C) preferably contains hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.

By reducing these cyclic low-molecular weight siloxanes, it is possible to avoid the reduction of adhesion due to the bleeding out of the low-molecular weight components on the surface of the cured product, the pollution of the surrounding environment due to the volatilization of the low-molecular weight components, and the like.

In the present invention, the (A) epoxy resin is preferably a bisphenol-type epoxy resin.

With such an epoxy resin composition, the characteristics of the bisphenol-type epoxy resins each selected and used can be strengthened, and both the elongation properties and the tensile shear strength of the epoxy resin composition can be increased compared to an epoxy resin composition in which the bisphenol-type epoxy resin is used alone.

In the present invention, the (D) epoxy resin curing agent is preferably an amine-based curing agent.

Such an epoxy resin composition has excellent curing properties.

In the present invention, the epoxy resin composition preferably further contains (E) a filler.

Such an epoxy resin composition can reinforce mechanical strength.

### ADVANTAGEOUS EFFECTS OF INVENTION

The present invention relates to an epoxy resin composition containing a polyorganosiloxane. More specifically, the present invention relates to an epoxy resin composition containing a polyorganosiloxane having an epoxy group at both ends and a urethane bond at the main chain, and a polyorganosiloxane having an epoxy group at both ends and a mesogenic group at the main chain.

The epoxy resin composition of the present invention is highly useful because, due to its predetermined structure and formulation, it disperses without causing phase separation when a cured product is prepared, improves toughness without reducing the heat resistance of the cured product, and exhibits good adhesion when the cured product is made between substrates. In addition, by reducing low-molecular weight cyclic siloxanes, it is possible to prevent the deposition of low-molecular weight cyclic siloxanes in the device, the failure of the device, and the like due to the volatilization and diffusion of the low-molecular weight cyclic siloxanes during the production of a cured product.

### DESCRIPTION OF EMBODIMENTS

As described above, an epoxy resin composition containing a polyorganosiloxane with excellent various properties has been required to be developed.

As a result of intensively studies to solve the above problems, the present inventors have found that the above problem can be solved by the epoxy resin composition containing (A) an epoxy resin, (B) a urethane bond-containing polyorganosiloxane, (C) a mesogenic group-containing polyorganosiloxane, and (D) an epoxy resin curing agent, and have completed the present invention.

That is, the present invention is directed to an epoxy resin composition containing:
(A) an epoxy resin containing two or more epoxy groups in a molecule;
(B) a urethane bond-containing polyorganosiloxane represented by the following formula (1): 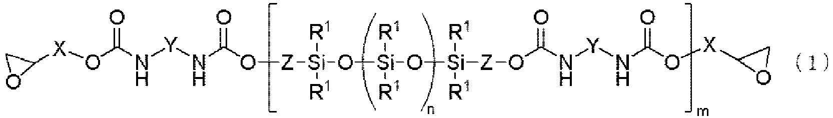 wherein, R¹ each independently represents a group selected from an alkyl group having 1 to 12 carbon atoms, an aryl group having 6 to 12 carbon atoms, and an aralkyl group having 7 to 12 carbon atoms, or a hydroxy group, X is each independently a divalent alkylene group having 1 to 10 carbon atoms, Y is each independently a group selected from an alkylene group having 5 to 30 carbon atoms and optionally having an ether bond, an arylene group having 6 to 30 carbon atoms, and an aralkylene group having 7 to 30 carbon atoms, Z is each independently an alkylene group having 1 to 20 carbon atoms and optionally having an ether bond, "n" is an integer from 0 to 100, and "m" is 1 to 10;
(C) a mesogenic group-containing polyorganosiloxane represented by the following formula (2): 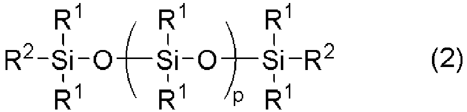 wherein, R¹ each independently represents a group selected from an alkyl group having 1 to 12 carbon atoms, an aryl group having 6 to 12 carbon atoms, and an aralkyl group having 7 to 12 carbon atoms, or a hydroxy group, "p" represents a repeating unit of a siloxane structure and is an integer from 0 to 100, and R² each independently represents the following formula (3) or formula (4): 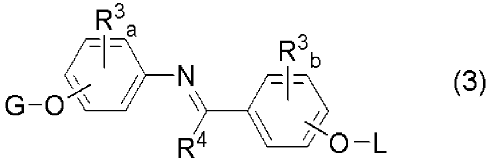 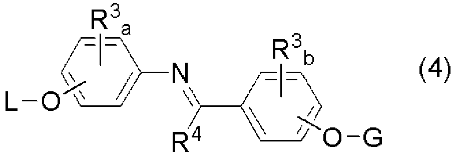 wherein, R³ and R⁴ each independently represent a hydrogen atom or a monovalent hydrocarbon group having 1 to 10 carbon atoms, L is a linking group to the formula (2) and is a divalent hydrocarbon group having 1 to 12 carbon atoms, "a" and "b" represent the number of substituents of phenyl group in the formulae (3) and (4) and are integers from 0 to 4, and G is a glycidyl ether group; and
(D) an epoxy resin curing agent.

### [Epoxy Resin Composition]

The epoxy resin composition of the present invention is an epoxy resin composition containing (A) an epoxy resin, (B) a urethane bond-containing polyorganosiloxane, (C) a mesogenic group-containing polyorganosiloxane, and (D) an epoxy resin curing agent.

Hereinafter, the present invention will be described in detail, but the present invention is not limited thereto.

### [(A) Epoxy Resin]

The (A) epoxy resin in the present invention contains two or more epoxy groups in a molecule. This epoxy resin can be any known epoxy resin and is not particularly limited, and examples thereof include bisphenol-type epoxy resins such as a bisphenol A-type epoxy resin, a bisphenol F-type epoxy resin, and a bisphenol S-type epoxy resin; alicyclic epoxy resins such as a dicyclopentadiene-type epoxy resin and 3,4-epoxycyclohexenylmethyl-3',4'-epoxycyclohexene carboxylate; polyfunctional phenol-type epoxy resins such as a resorcinol-type epoxy resin; stilbene-type epoxy resins, triazine skeleton-containing epoxy resins, fluorene skeleton-containing epoxy resins, triphenol-alkane-type epoxy resins, biphenyl-type epoxy resins, xylylene-type epoxy resins, biphenyl-aralkyl-type epoxy resins, naphthalene-type epoxy resins, and diglycidyl ether compounds of polycyclic aromatic groups such as anthracenes. These can be used singly or in combination of two or more. Preferably, it is a bisphenol-type epoxy resin. Note that, in the present invention, the component (A), the component (B), and the component (C) are different each other.

The epoxy equivalent of the (A) epoxy resin is not particularly limited, but from the viewpoints of the usable time after mixing, the strength of the cured product, and the like, it is preferably 50 to 5,000 g/eq, and more preferably 75 to 2,500 g/eq per solid basis.

The viscosity of the (A) epoxy resin is not particularly limited, but it is preferable that the (A) epoxy resin is liquid at 25°C, and the viscosity is 10 to 100,000 mPa·s, preferably 20 to 50,000 mPa·s. The viscosity is measured using a B-type viscometer.

### [(B) Urethane Bond-Containing Polyorganosiloxane]

The (B) urethane bond-containing polyorganosiloxane in the present invention is represented by the following formula (1).

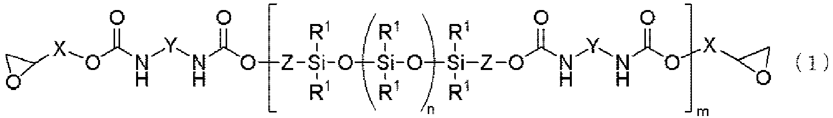

In the formula (1), R¹ each independently represents a group selected from an alkyl group having 1 to 12 carbon atoms, an aryl group having 6 to 12 carbon atoms, and an aralkyl group having 7 to 12 carbon atoms, or a hydroxy group, X is each independently a divalent alkylene group having 1 to 10 carbon atoms, Y is each independently a group selected from an alkylene group having 5 to 30 carbon atoms and optionally having an ether bond, an arylene group having 6 to 30 carbon atoms, and an aralkylene group having 7 to 30 carbon atoms, Z is each independently an alkylene group having 1 to 20 carbon atoms and optionally having an ether bond, "n" is an integer from 0 to 100, and "m" is 1 to 10.

In the formula (1), R¹ may be each independently a group selected from an alkyl group having 1 to 12 carbon atoms, preferably 1 to 8 carbon atoms, an aryl group having 6 to 12 carbon atoms, preferably 6 to 9 carbon atoms, and an aralkyl group having 7 to 12 carbon atoms, preferably 7 to 10 carbon atoms, or a hydroxy group. Specific examples thereof include a linear or branched alkyl group such as a methyl group, an ethyl group, an n-propyl group, an isopropyl group, an n-butyl group, an isobutyl group, an s-butyl group, a t-butyl group, an n-pentyl group, an n-hexyl group, an n-heptyl group, an n-octyl group, a 2-ethylhexyl group, an n-nonyl group, or an n-decyl group; a cycloalkyl group such as a cyclohexyl group; an aryl group such as a phenyl group or a naphthyl group; and an aralkyl group such as a benzyl group. Among them, a methyl group or a phenyl group is preferred.

In the formula (1), X is each independently an alkylene group having 1 to 10 carbon atoms, preferably 1 to 8 carbon atoms.

Specific examples of the alkylene group having 1 to 10 carbon atoms include a methylene group, an ethylene group, a propylene group, an n-hexylene group, and an n-octylene group. It is preferably a methylene group.

In the formula (1), Y is each independently a group selected from an alkylene group having 5 to 30 carbon atoms, an arylene group having 6 to 30 carbon atoms, and an aralkylene group having 7 to 30 carbon atoms.

The alkylene group having 5 to 30 carbon atoms may be linear, branched, or cyclic, and specific examples thereof include linear or branched alkylene groups such as an n-pentylene group, an n-hexylene group, an n-heptylene group, an n-octylene group, a 2-ethylhexylene group, an n-decylene group, an n-undecylene group, an n-dodecylene group, an n-tridecylene group, an n-tetradecylene group, an n-pentadecylene group, an n-hexadecylene group, an n-heptadecylene group, an n-octadecylene group, an n-nonadecylene group, and an n-eicosanylene group.

The alkylene group may also have one or more ether bonds in the middle of the molecular chain. Specifically, the alkylene group may be a group containing an ether bond, such as an ethyleneoxy group, a propyleneoxy group, or a butyleneoxy group, and may contain multiple ether bonds.

Examples of the arylene group having 6 to 30 carbon atoms include an o-phenylene group, an m-phenylene group, a p-phenylene group, a 3,5-tolylene group, a 2,4-tolylene group, a 2,6-tolylene group, a 1,2-naphthylene group, a 1,8-naphthylene group, a 2,3-naphthylene group, a 4,4'-biphenylene group, and a 4,4'-methylene bisphenyl group.

Examples of the aralkylene group having 7 to 30 carbon atoms include an o-xylylene group, an m-xylylene group, a p-xylylene group, and a 1,3-phenylenebis(2-propyl) group.

Preferred examples of the Y described above include the following groups. The dotted line indicates the bonding position to the nitrogen atom of the urethane bond in the formula (1), and hydrogen atoms are omitted in accordance with a usual practice.

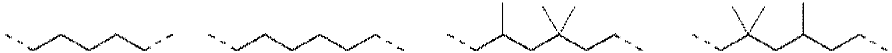

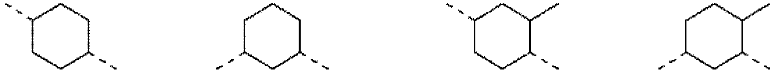

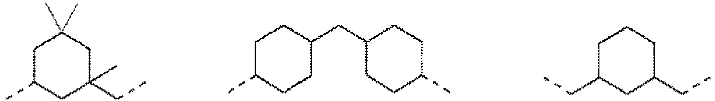

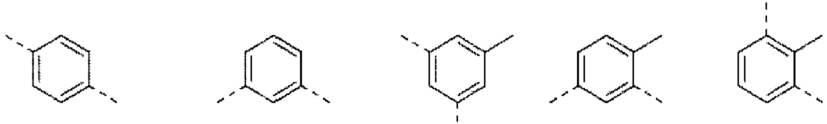

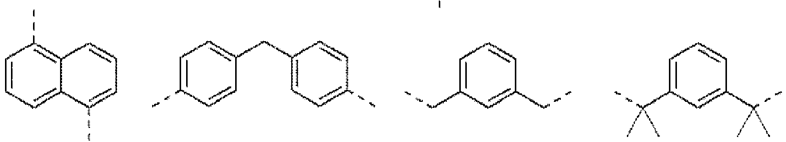

In the formula (1), Z is each independently an alkylene group having 1 to 20 carbon atoms, preferably 3 to 10 carbon atoms. It should be noted that one or more ether bonds may be interposed in the alkylene chain having 1 to 20 carbon atoms. Z is preferably a propylene group (-CH₂CH₂CH₂-) or an ethyleneoxypropylene group (*-CH₂CH₂OCH₂CH₂CH₂-). "*" indicates the bonding to the oxygen atom of the urethane bond in the formula (1).

In the formula (1), "n" represents an integer from 0 to 100. Preferably, "n" is an integer from 0 to 60.

In the formula (1), "m" represents the average degree of polymerization, and "m" is 1 to 10, preferably 1 or 2.

The number average molecular weight of the (B) urethane bond-containing polyorganosiloxane in the present invention is preferably 500 to 100,000, more preferably 500 to 50,000, and further preferably 500 to 20,000. With this range, it becomes a sufficient molecular weight for the epoxy groups at both ends to react with the curing agent to obtain a cured product. The number average molecular weight described above refers to the number average molecular weight in terms of polystyrene standard in the gel permeation chromatography (GPC) measurement under the following measurement conditions.

### [Measurement Conditions]

Deployment solvent: Tetrahydrofuran (THF)
Flow rate: 0.6 mL/min
Detector: Differential refractive index detector (RI)
Column: TSK Guardcolumn SuperH-H
TSKgel SuperHM-N (6.0 mm I.D. × 15 cm × 1)
TSKgel SuperH2500 (6.0 mm I.D. × 15 cm × 1)
(All manufactured by Tosoh Corporation)
Column temperature: 40°C
Sample injection volume: 50 µL (THF solution with a concentration of 0.3% by mass)

The epoxy equivalent (g/mol) of the (B) urethane bond-containing polyorganosiloxane in the present invention is preferably 300 to 5,000 g/mol, and more preferably 400 to 2,500 g/mol. With this range, the epoxy groups at both ends sufficiently react with the curing agent to obtain a cured product having excellent physical properties. The epoxy equivalent (g/mol) can be calculated by adding hydrochloric acid to a predetermined mass of the sample dissolved in 1,4-dioxane and reverse-titrating with an aqueous sodium hydroxide solution.

As described in WO 2016/111104 A1 and the like, low-molecular weight cyclic siloxanes may cause various problems, and it is preferable to reduce them. In the (B) urethane bond-containing polyorganosiloxane represented by the formula (1), the urethane bond-containing polyorganosiloxane containing hexamethylcyclotrisiloxane (D3), octamethylcyclotetrasiloxane (D4), decamethylcyclopentasiloxane (D5), and dodecamethylcyclohexasiloxane (D6) in a total amount of preferably 3,000 ppm or less, more preferably 2,000 ppm or less, and further preferably 1,000 ppm or less, can be used.

The amount of the low-molecular weight cyclic siloxanes (D3 to D6) described above can be quantified by gas chromatography (GC) using a sample obtained by extracting and diluting the (B) urethane bond-containing polyorganosiloxane represented by formula (1) with an organic solvent.

### [(C) Mesogenic Group-Containing Polyorganosiloxane]

The mesogenic group-containing polyorganosiloxane in the present invention is represented by the following formula (2).

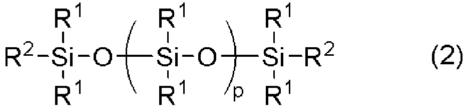

In the formula (2), R¹ each independently represents a group selected from an alkyl group having 1 to 12 carbon atoms, an aryl group having 6 to 12 carbon atoms, and an aralkyl group having 7 to 12 carbon atoms, or a hydroxy group, "p" represents a repeating unit of a siloxane structure and is an integer from 0 to 100, and R² each independently represents the following formula (3) or formula (4).

In the formula (2), R¹ each independently represents the same as those listed in the above formula (1).

"p" represents the number of repeating units of the siloxane structure and is an integer from 0 to 100, preferably from 0 to 40, more preferably from 0 to 10, and further preferably "p" = 1.

In the formula (2), R² is each independently the following formula (3) or (4).

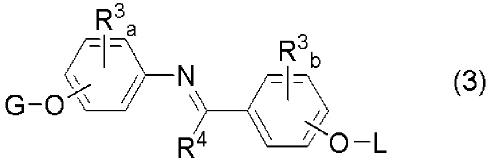

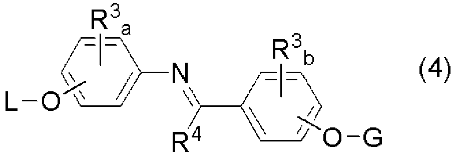

In the formulae (3) and (4), R³ and R⁴ each independently represent a hydrogen atom or a monovalent hydrocarbon group having 1 to 10 carbon atoms, L is a linking group to the formula (2) and is a divalent hydrocarbon group having 1 to 12 carbon atoms, "a" and "b" represent the number of substituents of phenyl group in the formulae (3) and (4) and are integers from 0 to 4, and G is a glycidyl ether group.

In the formulae (3) and (4), R³ and R⁴ each independently represent a hydrogen atom or a monovalent hydrocarbon group having 1 to 10 carbon atoms.

The monovalent hydrocarbon group having 1 to 10 carbon atoms is preferably a group selected from an alkyl group having 1 to 10 carbon atoms, an aryl group having 6 to 10 carbon atoms, or an aralkyl group having 7 to 10 carbon atoms, and specific examples thereof include the same as those illustrated in the above formula (1).

"a" and "b" represent the number of substituents of phenyl group in the formulae (3) and (4) and are integers from 0 to 4.

G in the formulae (3) and (4) is a glycidyl group.

L in the formulae (3) and (4) is a linking group to the formula (2) and is a divalent hydrocarbon group having 1 to 12 carbon atoms.

Examples of the divalent hydrocarbon group include an alkylene group having 1 to 12 carbon atoms, an arylene group having 6 to 12 carbon atoms, and an aralkylene group having 7 to 12 carbon atoms.

The alkylene group having 1 to 12 carbon atoms may be linear, branched, or cyclic, and specific examples thereof include linear or branched alkylene groups such as an n-pentylene group, an n-hexylene group, an n-heptylene group, an n-octylene group, a 2-ethylhexylene group, an n-decylene group, an n-undecylene group, and an n-dodecylene group.

The alkylene group may have one or more ether bonds in the middle of the molecular chain. Specifically, the alkylene group may be a group containing an ether bond, such as an ethyleneoxy group, a propyleneoxy group, or a butyleneoxy group, and may contain multiple ether bonds.

Examples of the arylene group having 6 to 12 carbon atoms include an o-phenylene group, an m-phenylene group, a p-phenylene group, a 3,5-tolylene group, a 2,4-tolylene group, a 2,6-tolylene group, a 1,2-naphthylene group, a 1,8-naphthylene group, a 2,3-naphthylene group, and a 4,4'-biphenylene group.

Examples of the aralkylene group having 7 to 12 carbon atoms include an o-xylylene group, an m-xylylene group, and a p-xylylene group.

R² in the formula (2) is further preferably the formula (5).

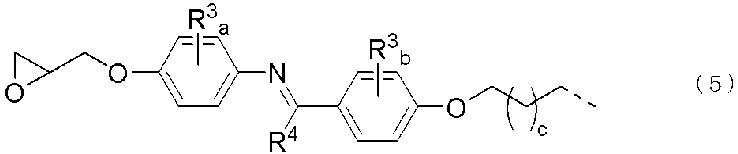

"c" represents the number of carbon atoms in the linking group to the siloxane skeleton in the formula (5) and is an integer from 0 to 6, and preferably "c" = 1.

The dotted line indicates the linking part to the formula (2).

The (C) mesogenic group-containing polyorganosiloxane in the present invention has preferably the number-average molecular weight of 500 to 100,000, more preferably 500 to 50,000, and further preferably 500 to 20,000. With this range, it becomes a sufficient molecular weight for the epoxy groups at both ends to react with the curing agent to obtain a cured product. The number-average molecular weight has the same meaning as described above.

The epoxy equivalent (g/mol) of the (C) mesogenic group-containing polyorganosiloxane in the present invention is preferably 300 to 5,000 g/mol, and more preferably 400 to 2,500 g/mol. With this range, the epoxy groups at both ends sufficiently react with the (D) epoxy resin curing agent described later to obtain a cured product having excellent physical properties. The epoxy equivalent (g/mol) can be calculated by adding hydrochloric acid to a predetermined mass of the sample dissolved in 1,4-dioxane and back-titrating with an aqueous sodium hydroxide solution.

As described in WO 2016/111104 A1 and the like, low-molecular weight cyclic siloxanes may cause various problems, and it is preferable to reduce them. In the component (C), the mesogenic group-containing polyorganosiloxane containing hexamethylcyclotrisiloxane (D3), octamethylcyclotetrasiloxane (D4), decamethylcyclopentasiloxane (D5), and dodecamethylcyclohexasiloxane (D6) in a total amount of preferably more than 0 ppm and 3,000 ppm or less, more preferably 0.1 to 2,000 ppm, and further preferably 0.1 to 1,000 ppm, can be used.

The amount of the low-molecular weight cyclic siloxanes (D3 to D6) described above is a value quantified by gas chromatography (GC) using a sample obtained by extracting and diluting the component (C) with an organic solvent. The terms "more than 0 ppm" means that a peak, even a slight peak, is detected when the quantification is performed by the method described above.

In the present invention, when the component (A) is 100 parts by mass, the component (B) is preferably 1 to 20 parts by mass, and more preferably 10 to 20 parts by mass. Similarly, when the component (A) is 100 parts by mass, the component (C) is preferably 1 to 20 parts by mass, and more preferably 1 to 10 parts by mass. When the parts by mass of the component (B) and the component (C) are within this range, strength and adhesion of the epoxy resin as a cured product can be sufficiently obtained. In addition, Tg lowering can be suppressed, thus high heat resistance can be maintained.

### [(D) Epoxy Resin Curing Agent]

The (D) epoxy resin curing agent in the present invention can be a known curing agent capable of reacting with and curing the epoxy resin. The curing agent is added to react a reactive functional group (such as an amino group, a phenolic hydroxy group, an acid anhydride group, or a mercapto group) in the molecule of the curing agent with an epoxy group in the component (A), the component (B), and the component (C) to form a cured product having a three-dimensional cross-linked structure.

Examples of the component (D) include an amine-based curing agent, a phenol-based curing agent, an acid anhydride-based curing agent, and a thiol-based curing agent.

Among them, the component (D) is preferably an amine-based curing agent, and examples of the amine-based curing agent include an aromatic polyamine, an aliphatic polyamine, a polyamide amine, and a polyether polyamine. More preferably, the component (D) is an aromatic polyamine.

Examples of the aromatic polyamine include compounds of the following formulae (I) to (IV).

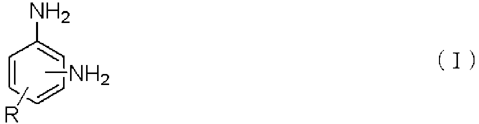

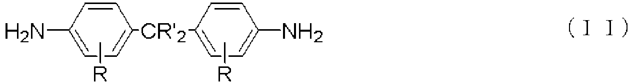

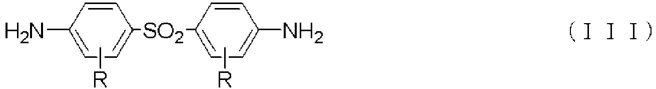

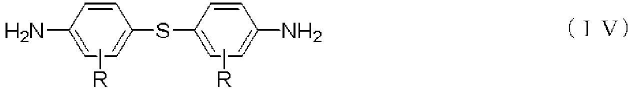

In the formulae (I) to (IV), R is each independently a hydrogen atom or a monovalent alkyl group having 1 to 6 carbon atoms, **R'** is each independently a hydrogen atom, a monovalent alkyl group having 1 to 12 carbon atoms, a phenyl group, or an aminophenyl group, and the two **R'** may be bonded together to form a ring structure with the carbon atom to which they are bonded.

Specific examples of the aromatic polyamine include aromatic diaminodiphenylmethane compounds such as 4,4'-diaminodiphenylmethane, 3,3'-diethyl-4,4'-diaminodiphenylmethane, 3,3',5,5'-tetramethyl-4,4'-diaminodiphenylmethane, and 3,3',5,5'-tetraethyl-4,4'-diaminodiphenylmethane, 2,4-diaminotoluene, 1,4-diaminobenzene, and 1,3-diaminobenzene. These can be used singly or in combination of two or more.

In the present invention, when the component (A) is 100 parts by mass, the component (D) is preferably 1 to 20 parts by mass, and more preferably 1 to 10 parts by mass. When the parts by mass of the component (D) is 20 parts by mass or less, strength and adhesion of the epoxy resin as a cured product can be sufficiently obtained. In addition, Tg lowering can be suppressed, thus high heat resistance can be maintained. When the parts by mass of the component (D) is 1 part by mass or more, the desired effect due to the addition of the component (D) becomes sufficient.

### [Other Components]

The epoxy resin composition of the present invention may further contain (E) a filler. Examples of the filler include silica such as molten silica, crystalline silica, and cristobalite, and metal oxides such as aluminum oxide, titanium oxide, and magnesium oxide, and these may be used singly or in combination of two or more. Among them, silica is preferable from the viewpoints of availability and quality stability. The average particle size is preferably 0.1 to 50 µm and can be selected depending on the application. The average particle size may be a volume average particle size measured by, for example, laser diffraction method.

The filler is preferably previously surface-treated with a coupling agent such as a silane coupling agent. Note that the formulation amount and the surface treatment method of the coupling agent used for the surface treatment are not particularly limited.

In the epoxy resin composition of the present invention, other additives can be added according to the purpose of the present invention, as needed. Examples of the additives include a reactive diluent, a curing accelerator, a flame retardant, an ion trapping agent, an antioxidant, an adhesion aid, a coloring agent, and a coupling agent.

Regarding the method of producing the epoxy resin composition in the present invention, the composition can be obtained, for example, by simultaneously mixing, stirring, dissolving, and dispersing the component (A), the component (B), the component (C), and the component (D) while performing a heat treatment. The composition can also be obtained by mixing, stirring, dissolving, and dispersing the component (A), the component (B), the component (C), or the component (D) while performing heat treatments separately. Preferably, the composition in which the component (B) is well dispersed can be obtained by mixing, stirring, dissolving, and dispersing the component (B), the component (C), and the component (D) while performing a heat treatment, and then adding the component (A).

The component (E) and/or other additives may be added, as needed. They may be added to the component (A), the component (B), the component (C), and the component (D), and mixed, stirred, dissolved, and dispersed while being heat-treated simultaneously or separately. Alternatively, the component (B), the component (C), and the component (D) may be mixed, stirred, dissolved, and dispersed while being heat-treated, and then the component (E) and/or other additives may be added simultaneously with the component (A).

The curing conditions of the epoxy resin composition in the present invention are not particularly limited, and the curing may be performed by heating at a temperature of, for example, 60 to 200°C, preferably 80 to 180°C, for 30 minutes to 10 hours, preferably 1 to 5 hours. The curing may also be performed by heating them, for example, by 1 to 5 stages from a low temperature to a high temperature, for the time described above to perform the reaction efficiently.

### EXAMPLE

Hereinafter, the present invention will be specifically described with Examples, Comparative Examples, and Synthesis Examples, but the present invention is not limited thereto.
Bisphenol A-type epoxy resin: jER828EL manufactured by Mitsubishi Chemical Corporation (Epoxy equivalent: 186 g/mol, viscosity: 13,000 mPa·s) (hereinafter referred to as DGEBA)
Amine-based curing agent: 4,4'-diaminodiphenylmethane manufactured by Tokyo Chemical Industry Co., Ltd. (N-H equivalent: 49.6 g/mol) (hereinafter referred to as DDM)

### [Synthesis Example 1] Synthesis method of SU epoxy resin

To a 500 mL separable flask, 91.95 g of isophorone diisocyanate (0.827 mol of NCO) was charged, and a mechanical stirrer, a stirring blade, a Dimroth condenser, a nitrogen gas inlet, and a thermometer were attached, and the nitrogen gas was flushed. Next, 0.32 g (0.1% by mass) of the catalyst K-KAT XK-640 (bismuth carboxylate manufactured by Kusumoto Chemicals, Ltd., containing 18% bismuth) was added, and the inner temperature was raised to 60°C. To this, 200.00 g (0.413 mol of OH, NCO/OH = 2.0) of 3-(2-hydroxyethoxy)propyldimethylsiloxy-terminal polydimethylsiloxane (n = 8, OH value 116 mgKOH/g) containing D3 at 64 ppm, D4 at 59 ppm, D5 at 23 ppm, and D6 at 226 ppm was added using a 300 mL dropping funnel for 30 minutes, and then the mixture was aged at 70°C for 3 hours. Then, 30.80 g (0.415 mol) of glycidol was added, and the mixture was aged at 70°C for 2 hours to obtain 319.17 g of a colorless and slightly turbid viscous liquid. "m" was 1 from NCO/OH = 2.0.

The low-molecular weight cyclic siloxanes were extracted with 10 mL of hexane per 1 g of the sample using tetradecane as the internal standard and measured by GC. As a result, the total amount of D3 to D6 was 305 ppm (D3: 54 ppm, D4: 52 ppm, D5: 16 ppm, D6: 183 ppm).

### [Synthesis Example 2] Synthesis method of SM epoxy resin

To a glass reactor, 360 mL of ethanol, 17.9 g of p-aminophenol (0.164 mol), 20 g of 4-allyloxybenzaldehyde (0.164 mol) and a small amount of zinc chloride were added, and reacted in an oil bath at 60°C for 4 hours, and then allowed to stand for 2 hours in a refrigerator, and the precipitated crystals were filtered off to obtain 27 g of 4-((4-allyloxy)benzylideneamino)phenol.

Next, to a 500 ml separable flask, 7 g of the obtained 4-((4-allyloxy)benzylideneamino)phenol (0.033 mol), 5 mL of dimethyl sulfoxide, 37 g of epichlorohydrin (0.394 mol), and a small amount of tetra-n-butyl ammonium chloride were added, and the mixture was reacted at 60°C for 2 hours, then 3.16 g of a 50% aq. sodium hydroxide solution (0.04 mol) was added dropwise over 1 hour, and the mixture was further reacted for 3 hours. The obtained solution was cooled, and the precipitated crystals were filtered off, washed thoroughly with distilled water, and then dried to obtain 3.9 g of 4-((4-allyloxy)benzylideneamino)phenol glycidyl ether.

2 g of 4-((4-allyloxy)benzylideneamino)phenol glycidyl ether (6.5 mmol) was taken into a separable flask and dissolved in 40 mL of 1,4-dioxane. 0.667 g of 1,1,3,3,5,5-hexamethyltrisiloxane (3.24 mmol) and 0.02 g of 1,3-divinyl-1,1,3,3-tetramethyldisiloxane platinum complex (0.06 mmol) were further added, and the temperature of the oil bath was raised to 90°C, and the mixture was heated and stirred for 6 hours.

The reaction solution was cooled, and the precipitated crystals were filtered off and washed thoroughly with methanol to obtain white crystals. The amount of low-molecular weight cyclic siloxanes (D3 to D6) of the obtained SM epoxy resin was measured, and all of them were below the detection limit.

### [Example 1]

The defoamed DGEBA, Synthesis Example 1, and Synthesis Example 2 were placed in an aluminum cup and heated on a hot plate at 130°C to reduce the viscosity. The stoichiometric amount of DDM was then placed in another aluminum cup and stirred until completely melted on a hot plate at the same temperature. The melted DDM was then added to the aluminum cup that had been prepared previously, and the mixture was stirred for 5 minutes to prepare a composition.

Then, the aluminum cup containing the above composition was heated by three stages of 120°C for 2 hours, 150°C for 2 hours, and then 180°C for 2 hours for curing. The temperature rise rate was set to 5°C/min. The formulation amount and the physical properties of the cured product are described in Table 1.

### [Example 2]

Into an aluminum cup were added Synthesis Example 1, Synthesis Example 2 and a stoichiometric amount of DDM with respect to the melted entire epoxy, and the mixture was stirred on a hot plate at 140°C for 15 minutes. The defoamed DGEBA was then placed in another aluminum cup and heated on a hot plate at the same temperature to reduce the viscosity. Then, the viscosity-reduced DGEBA was added to the aluminum cup that had been prepared previously, and the mixture was heated and stirred for 2 minutes to prepare a composition.

The aluminum cup containing the above composition was then heated by three stages of 120°C for 2 hours, 150°C for 2 hours, and then 180°C for 2 hours in a thermostatic bath for curing. The temperature rise rate was set to 5°C/min. The formulation amount and the physical properties of the cured product are described in Table 1.

### [Comparative Example 1]

The defoamed DGEBA was placed in an aluminum cup and heated on a hot plate at 130°C to reduce the viscosity. The stoichiometric amount of DDM was then placed in another aluminum cup and stirred until completely melted on a hot plate at the same temperature. Then, the melted DDM was added to the aluminum cup containing DGEBA, and the mixture was stirred for 5 minutes to prepare a composition.

The aluminum cup containing the above composition was then heated by three stages of 120°C for 2 hours, 150°C for 2 hours, and then 180°C for 2 hours in a thermostatic bath for curing. The temperature rise rate was set to 5°C/min. The formulation amount and the physical properties of the cured product are described in Table 1.

### [Comparative Example 2]

The defoamed DGEBA and Synthesis Example 1 were placed in an aluminum cup and heated on a hot plate at 130°C to reduce the viscosity. The stoichiometric amount of DDM was then placed in another aluminum cup and stirred until completely melted on a hot plate at the same temperature. The melted DDM was then added to the aluminum cup that had been prepared previously, and the mixture was stirred for 5 minutes to prepare a composition.

Then, the aluminum cup containing the above composition was heated by three stages of 120°C for 2 hours, 150°C for 2 hours, and then 180°C for 2 hours for curing. The temperature rise rate was set to 5°C/min. The formulation amount and the physical properties of the cured product are described in Table 1.

### [Comparative Example 3]

The defoamed DGEBA and Synthesis Example 2 were placed in an aluminum cup and heated on a hot plate at 130°C to reduce the viscosity. The stoichiometric amount of DDM was then placed in another aluminum cup and stirred until completely melted on a hot plate at the same temperature. The melted DDM was then added to the aluminum cup that had been prepared previously, and the mixture was stirred for 5 minutes to prepare a composition.

Then, the aluminum cup containing the above composition was heated by three stages of 120°C for 2 hours, 150°C for 2 hours, and then 180°C for 2 hours for curing. The temperature rise rate was set to 5°C/min. The formulation amount and the physical properties of the cured product are described in Table 1.

### [Dynamic Viscoelasticity Measurement]

The cured products of Examples 1 to 2 and Comparative Examples 1 to 3 were cut to a test specimen size of 30 mm in length × 4.0 mm in width × 0.40 mm in thickness, and measured with Rheogel-E40000 manufactured by UBM under conditions of a temperature range of -150 to 250°C, sine waves, a temperature rise rate of 2.5°C/min, a tensile mode, and a frequency of 10 Hz. For the obtained results, the peak top of the loss tangent tanδ, which is the ratio of loss modulus (G") to storage modulus (G'), was taken as Tg.

**[Table 1]**

| | Example 1 | Example 2 | Comparative Example 1 | Comparative Example 2 | Comparative Example 3 |
|---|---|---|---|---|---|
| DGEBA (g) | 1.50 | 1.50 | 1.50 | 1.50 | 1.50 |
| Synthesis Example 1 (g) | 0.30 | 0.15 | - | 0.15 | - |
| Synthesis Example 2 (g) | 0.15 | 0.15 | - | - | 0.15 |
| DDM (g) | 0.44 | 0.43 | 0.40 | 0.41 | 0.41 |
| Composition appearance | Clouded | Clouded | Colorless and transparent | Clouded | Colorless and transparent |
| Appearance after cure | Blown and opaque | Blown and opaque | Yellow and transparent | Blown and opaque | Blown and transparent |
| Tg (°C) | 166 | 148 | 184 | 148 | 178 |

### [Examples 3 to 4 and Comparative Examples 4 to 6]

### [Tensile Shear Adhesion Test]

The mild steel plate was immersed in acetone and subjected to ultrasonic cleaning of 30 minutes. The mild steel plate was then polished with an electric sander mounted with #240 abrasive paper to remove the oxide film on the surface, immersed in acetone, and subjected to ultrasonic cleaning of 30 minutes for two times. After that, a backing plate (25 mm in length × 25 mm in width × 1.6 mm in thickness) was affixed to the portion of 62.5 mm from the end of the mild steel plate. The composition prepared in each Example was then applied from the end of the mild steel plate to 12.5 mm, superimposed with another mild steel plate, and then heated at 5 MPa, 120°C for 2 hours using a hot press. After that, the test specimen was loaded with a weight (weight: 1,700 g, pressure: 960 Pa) in a thermostatic bath, heated at 150°C for 2 hours, then heated to 180°C at a temperature rise rate of 5°C/min, and heated and cured at 180°C for 2 hours to prepare a test specimen. After slow cooling, the test specimen was taken out, and the resin protruding from the joint part was removed with a cutter knife.

The obtained test specimen was subjected to a tensile shear adhesion test under conditions of a head speed of 50 mm/min using AGS-X manufactured by Shimadzu Corporation. For the breaking strength and breaking elongation, an average value of N = 5 was taken. The failure pattern was observed visually. The composition used for the evaluation and the results of the tensile shear adhesion test are described in Table 2.

### [T-peel Test]

An aluminum foil (200 mm in length × 500 mm in width × 0.05 mm in thickness) was used. The composition prepared in each Example was applied from the end of the aluminum foil to a length of 170 mm, superimposed with another aluminum foil, and then heated at 5 MPa, 120°C for 2 hours using a hot press. After that, the test specimen was loaded with a weight (weight: 1,700 g, pressure: 960 Pa) in a thermostatic bath, heated at 150°C for 2 hours, then heated to 180°C at a temperature rise rate of 5°C/min, and heated and cured at 180°C for 2 hours to prepare a test specimen. After slow cooling, the aluminum foil was taken out and cut to a width of 25 mm to prepare a test specimen.

The obtained test specimen was subjected to a T-peel test under conditions of a head speed of 100 mm/min using AGS-X manufactured by Shimadzu Corporation. The average test force in 150 mm excluding 25 mm each of the test specimen at the beginning and the end of the test was taken as a Peel strength, and the average value of N = 5 was taken. The failure pattern was observed visually. The composition used for the evaluation and the results of the T-peel test are described in Table 2.

**[Table 2]**

| | Example 3 | Example 4 | Comparative Example 4 | Comparative Example 5 | Comparative Example 6 |
|---|---|---|---|---|---|
| Composition | Example 1 | Example 2 | Comparative Example 1 | Comparative Example 2 | Comparative Example 3 |
| Tensile shear adhesion test | | | | | |
| Breaking strength (MPa) | 13.6 | 15.0 | 11.4 | 12.8 | 12.4 |
| Breaking elongation (%) | 10.0 | 12.9 | 7.1 | 8.5 | 8.7 |
| Failure pattern | Interfacial peeling | Interfacial peeling | Interfacial peeling | Interfacial peeling | Interfacial peeling |

| T-peel test | | | | | |
|---|---|---|---|---|---|
| Peel strength (N/25mm) | - | 7.44 | 5.45 | - | 2.20 |
| Failure pattern | - | Interfacial peeling | Interfacial peeling | - | Interfacial peeling |

In the tensile shear adhesion test and the T-peel test, the increases in breaking strength and Peel strength were observed in Examples compared to Comparative Examples. This shows that the epoxy resin of the present invention is effective in improving the adhesion to the substrate, which shows the usefulness of the epoxy resin composition of the present invention.

The present description includes the following embodiments.
[1]: An epoxy resin composition comprising:
   (A) an epoxy resin containing two or more epoxy groups in a molecule;
   (B) a urethane bond-containing polyorganosiloxane represented by the following formula (1): 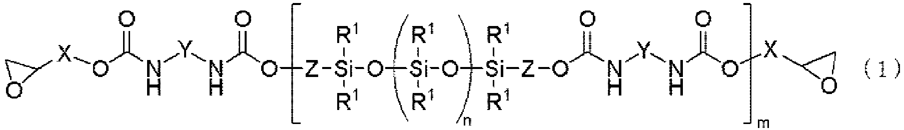 wherein, R¹ each independently represents a group selected from an alkyl group having 1 to 12 carbon atoms, an aryl group having 6 to 12 carbon atoms, and an aralkyl group having 7 to 12 carbon atoms, or a hydroxy group, X is each independently a divalent alkylene group having 1 to 10 carbon atoms, Y is each independently a group selected from an alkylene group having 5 to 30 carbon atoms and optionally having an ether bond, an arylene group having 6 to 30 carbon atoms, and an aralkylene group having 7 to 30 carbon atoms, Z is each independently an alkylene group having 1 to 20 carbon atoms and optionally having an ether bond, "n" is an integer from 0 to 100, and "m" is 1 to 10;
   (C) a mesogenic group-containing polyorganosiloxane represented by the following formula (2): 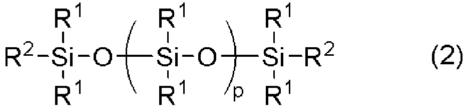 wherein, R¹ each independently represents a group selected from an alkyl group having 1 to 12 carbon atoms, an aryl group having 6 to 12 carbon atoms, and an aralkyl group having 7 to 12 carbon atoms, or a hydroxy group, "p" represents a repeating unit of a siloxane structure and is an integer from 0 to 100, and R² each independently represents the following formula (3) or formula (4): 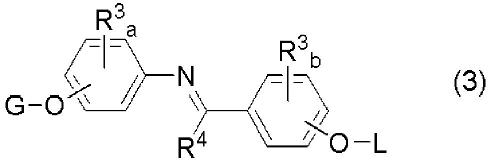 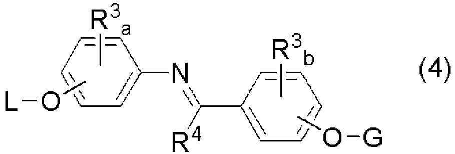 wherein, R³ and R⁴ each independently represent a hydrogen atom or a monovalent hydrocarbon group having 1 to 10 carbon atoms, L is a linking group to the formula (2) and is a divalent hydrocarbon group having 1 to 12 carbon atoms, "a" and "b" represent the number of substituents of phenyl group in the formulae (3) and (4) and are integers from 0 to 4, and G is a glycidyl ether group; and
   (D) an epoxy resin curing agent.
[2]: The epoxy resin composition according to the above [1], wherein 1 to 20 parts by mass of the component (B) and 1 to 20 parts by mass of the component (C) are comprised based on 100 parts by mass of the component (A).
[3]: The epoxy resin composition according to the above [1] or [2], wherein a number average molecular weight of the component (B) in terms of polystyrene standard is 500 to 100,000.
[4]: The epoxy resin composition according to any one of the above [1] to [3], wherein an epoxy equivalent (g/mol) of the component (B) is 300 to 5,000 g/mol.
[5]: The epoxy resin composition according to any one of the above [1] to [4], wherein the component (B) contains hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.
[6]: The epoxy resin composition according to any one of the above [1] to [5], wherein a number average molecular weight of the component (C) in terms of polystyrene standard is 500 to 100,000.
[7]: The epoxy resin composition according to any one of the above [1] to [6], wherein an epoxy equivalent (g/mol) of the component (C) is 300 to 5,000 g/mol.
[8]: The epoxy resin composition according to any one of the above [1] to [7], wherein the component (C) contains hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.
[9]: The epoxy resin composition according to any one of the above [1] to [8], wherein the (A) epoxy resin is a bisphenol-type epoxy resin.
[10]: The epoxy resin composition according to any one of the above [1] to [9], wherein the (D) epoxy resin curing agent is an amine-based curing agent.
[11]: The epoxy resin composition according to any one of the above [1] to [10], further comprising (E) a filler.

The present invention is not limited to the above embodiments. The above embodiments are to show examples, and anything having substantially the same configuration as the technical ideas described in the claims of the present invention and having a similar effect is encompassed within the technical scope of the present invention.

## Claims

1. An epoxy resin composition comprising:
(A) an epoxy resin containing two or more epoxy groups in a molecule;
(B) a urethane bond-containing polyorganosiloxane represented by the following formula (1): 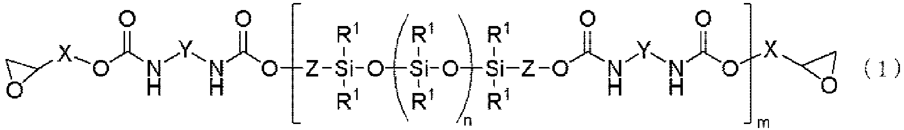 wherein, R¹ each independently represents a group selected from an alkyl group having 1 to 12 carbon atoms, an aryl group having 6 to 12 carbon atoms, and an aralkyl group having 7 to 12 carbon atoms, or a hydroxy group, X is each independently a divalent alkylene group having 1 to 10 carbon atoms, Y is each independently a group selected from an alkylene group having 5 to 30 carbon atoms and optionally having an ether bond, an arylene group having 6 to 30 carbon atoms, and an aralkylene group having 7 to 30 carbon atoms, Z is each independently an alkylene group having 1 to 20 carbon atoms and optionally having an ether bond, "n" is an integer from 0 to 100, and "m" is 1 to 10;
(C) a mesogenic group-containing polyorganosiloxane represented by the following formula (2): 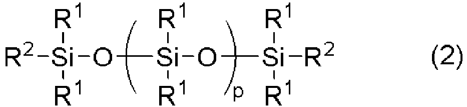 wherein, R¹ each independently represents a group selected from an alkyl group having 1 to 12 carbon atoms, an aryl group having 6 to 12 carbon atoms, and an aralkyl group having 7 to 12 carbon atoms, or a hydroxy group, "p" represents a repeating unit of a siloxane structure and is an integer from 0 to 100, and R² each independently represents the following formula (3) or formula (4): 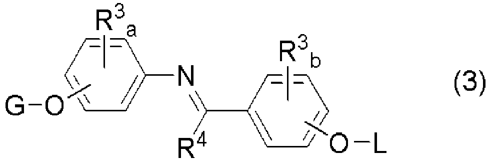 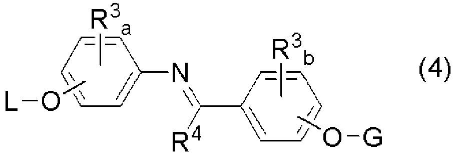 wherein, R³ and R⁴ each independently represent a hydrogen atom or a monovalent hydrocarbon group having 1 to 10 carbon atoms, L is a linking group to the formula (2) and is a divalent hydrocarbon group having 1 to 12 carbon atoms, "a" and "b" represent the number of substituents of phenyl group in the formulae (3) and (4) and are integers from 0 to 4, and G is a glycidyl ether group; and
(D) an epoxy resin curing agent.

2. The epoxy resin composition according to claim 1, wherein 1 to 20 parts by mass of the component (B) and 1 to 20 parts by mass of the component (C) are comprised based on 100 parts by mass of the component (A) .

3. The epoxy resin composition according to claim 1, wherein a number average molecular weight of the component (B) in terms of polystyrene standard is 500 to 100,000.

4. The epoxy resin composition according to claim 1, wherein an epoxy equivalent (g/mol) of the component (B) is 300 to 5,000 g/mol.

5. The epoxy resin composition according to claim 1, wherein the component (B) contains hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.

6. The epoxy resin composition according to claim 1, wherein a number average molecular weight of the component (C) in terms of polystyrene standard is 500 to 100,000.

7. The epoxy resin composition according to claim 1, wherein an epoxy equivalent (g/mol) of the component (C) is 300 to 5,000 g/mol.

8. The epoxy resin composition according to claim 1, wherein the component (C) contains hexamethylcyclotrisiloxane (D3), octamethylcyclotetrasiloxane (D4), decamethylcyclopentasiloxane (D5), and dodecamethylcyclohexasiloxane (D6) in a total amount of 3,000 ppm or less.

9. The epoxy resin composition according to claim 1, wherein the (A) epoxy resin is a bisphenol-type epoxy resin.

10. The epoxy resin composition according to claim 1, wherein the (D) epoxy resin curing agent is an amine-based curing agent.

11. The epoxy resin composition according to any one of claims 1 to 10, further comprising (E) a filler.
